# EUROPEAN PATENT SPECIFICATION

(11) **EP 4 379 932 B1**
(45) Date of publication and mention of the grant of the patent: **15.07.2026**
(21) Application number: 22890267.2
(22) Date of filing: 26.10.2022
(51) Int. Cl.: H01M 50/30, H01M 50/358, H01M 50/342, H01M 50/204, H01M 50/211, H01M 50/209

(54) **BATTERY PACK AND DEVICE INCLUDING THE SAME**
BATTERIEPACK UND VORRICHTUNG DAMIT
BLOC-BATTERIE ET DISPOSITIF COMPRENANT LEDIT BLOC-BATTERIE

(30) Priority: 03.11.2021 KR 20210149627
(43) Date of publication of application: 05.06.2024
(73) Proprietor: LG Energy Solution, Ltd., Seoul 07335 (KR)
(72) Inventor: AHN, Moon Youl, Daejeon 34122 (KR); KIM, Soo Han, Daejeon 34122 (KR)
(74) Representative: Plasseraud IP
(86) International application number: PCT/KR2022/016489
(87) International publication number: WO 2023/080532

(56) References cited:
- EP-A1- 3 817 086
- EP-A1- 4 199 215
- EP-A1- 4 276 983
- JP-A- 2007 035 444
- JP-A- 2014 160 573
- KR-A- 20200 041 708
- KR-A- 20200 107 214
- KR-A- 20210 091 514

## Description

### [TECHNICAL FIELD]

### Cross Citation with Related Application(s)

This application claims the benefit of Korean Patent Application No. 10-2021-0149627 filed on November 3, 2021 with the Korean Intellectual Property Office.

The present disclosure relates to a battery pack and a device including the same, and more particularly, to a battery pack that can prevent external ignition phenomena, and a device including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, being freely charged and discharged, and having very low self-discharge rate and high energy density.

Meanwhile, in the case of a secondary battery used for small-sized devices, two to three battery cells are used, but in the case of a secondary battery used for a middle or large-sized device such as an automobile, a battery module or a battery pack in which a large number of battery cells are electrically connected is used.

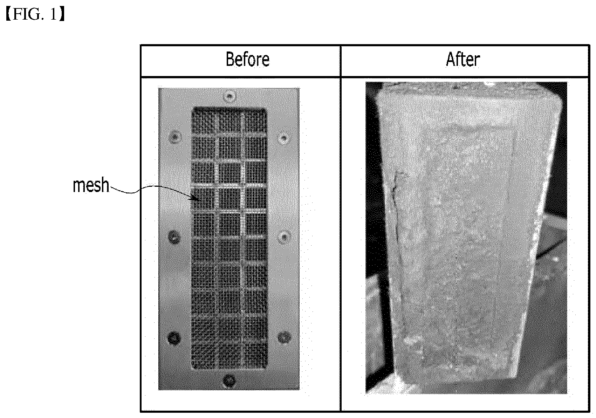

Fig. 1 shows a state before and after an ignition phenomenon of a mesh formed in a conventional battery pack.

Battery cells mounted in battery modules or battery packs can generate a large amount of heat in a charge and discharge process. If the temperature becomes higher than the proper temperature due to reasons such as overcharging, performance may deteriorate, and if the temperature rise is excessive, it may cause explosion or ignition. When the battery cell ignites, internal materials of the cell may be ejected along with high-temperature inflammable gas to the outside of the battery module or the battery pack. Such internal materials are mainly materials such as C, Cu, Al, Ni, Co, Mg, and Li, and are ejected in the form of high-temperature particles, that is, sparks.

Meanwhile, such sparks not only can promote continuous thermal runaway phenomena within the battery module or the battery pack, but also when discharged to the outside, it causes problems of the external ignition phenomena due to contact with a flammable gas or an external oxygen. Therefore, in recent years, attempts have been made to form a mesh on a frame of a battery module or battery pack to minimize the release of particles

However, even if a mesh is formed in the frame, when a particle closes an opening in the mesh as shown in Fig. 1, the release of internal gas is limited, and thus, the internal pressure of the battery module or pack increases rapidly, which causes problems of the explosion or damage to the frame. Therefore, there is a need for an effective frame structure that limits the release of sparks to the outside of the frame. An example of a power supply device having a plurality of secondary battery cells with discharge valves can be found in EP 3817086 A1.

### [DETAILED DESCRIPTION OF THE INVENTION]

### [Technical Problem]

It is an object of the present disclosure to provide a battery pack having improved durability and safety by preventing external ignition phenomena caused by sparks, and a device including the same.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery pack according to claim 1.

The filter mesh may be located parallel to the lower surface of the pack frame.

The venting flow path may be located so as to be spaced apart from the lower surface of the pack frame.

A venting part is formed on one surface of the battery module, and the battery module may be arranged so that one surface of the pack frame and the venting part face each other.

The venting flow path may be located on the upper side of the venting part.

The filter mesh may be located on the upper side of the venting part.

The venting part may be in the form of a plate that is broken at a predetermined pressure or higher.

The venting part may be in the form of a valve that is opened at a predetermined pressure or higher.

According to another embodiment of the present disclosure, there is provided a device comprising at least one battery pack as described above.

### [Advantageous Effects]

According to embodiments, the battery pack of the present disclosure prevents particles from being releases to the outside of the battery pack, thereby preventing ignition phenomena from being propagated to the outside of the battery pack.

The effects of the present disclosure are not limited to the effects mentioned above and additional other effects not described above will be clearly understood from the detailed description and the appended drawings by those skilled in the art.

### [BRIEF DESCRIPTION OF THE DRAWINGS]

Fig. 1 shows a state before and after an ignition phenomenon of a mesh formed in a conventional battery pack;
Fig. 2 is a perspective view of a battery pack according to an embodiment of the present disclosure;
Fig. 3 is a perspective view of a battery module included in the battery pack according to Fig. 2;
Fig. 4 is a top view of the battery pack according to Fig. 2;
Fig. 5 is a partial cross-sectional view of the battery pack according to Fig. 2.
Figs. 6 and 7 are diagrams for comparing effects according to positions of filters.

### [DETAILED DESCRIPTION OF THE EMBODIMENTS]

Hereinafter, various embodiments of the present disclosure will be described in detail with reference to the accompanying drawings so that those skilled in the art can easily carry out them.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, the upper surface/lower surface of a specific member can be determined differently depending on which direction is used for a reference direction. Thus, throughout the description, 'upper surface' or 'lower surface' is defined as meaning two surfaces facing each other on the z-axis of the member. In addition, the side surface may mean a surface that is perpendicular to the upper surface or the lower surface.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Hereinafter, a battery pack according to one embodiment of the present disclosure will be described.

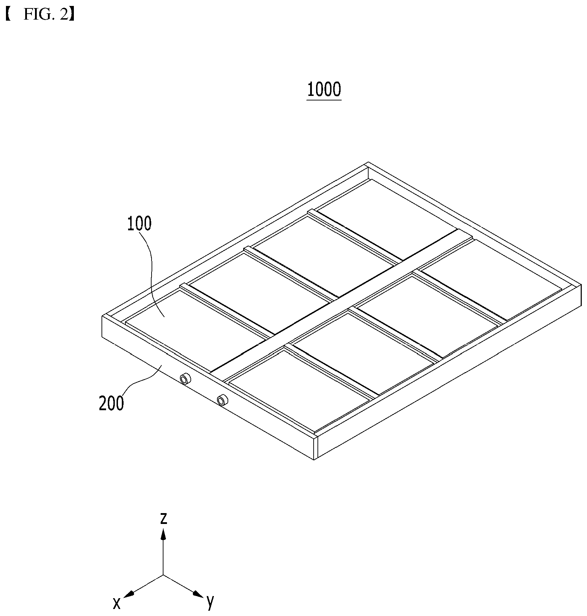

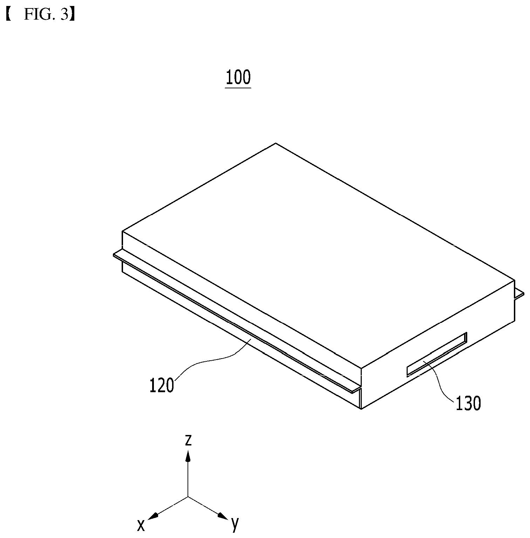

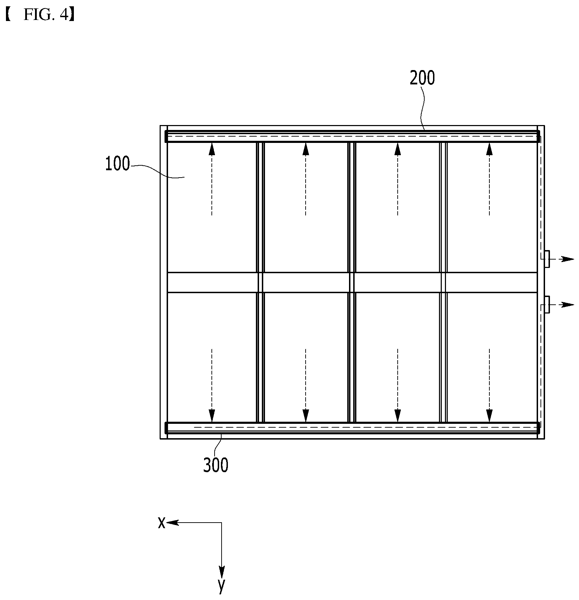

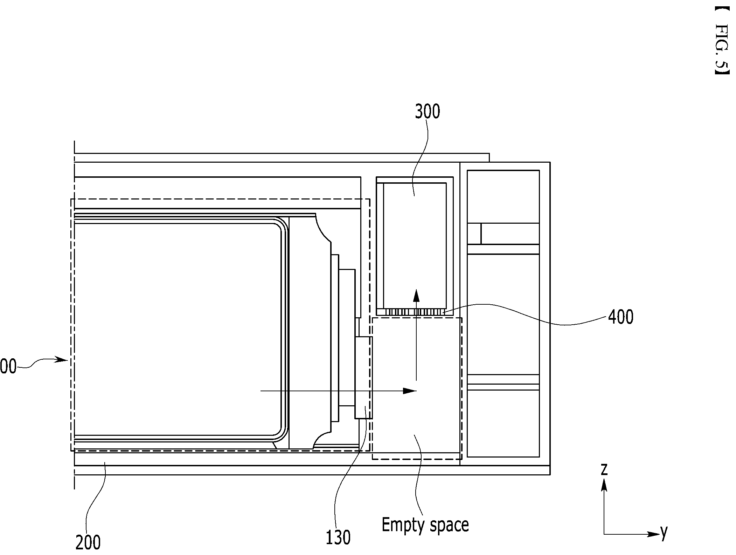

Fig. 2 is a perspective view of a battery pack according to an embodiment of the present disclosure. Fig. 3 is a perspective view of a battery module included in the battery pack according to Fig. 2. Fig. 4 is a top view of the battery pack according to Fig. 2. Fig. 5 is a partial cross-sectional view of the battery pack according to Fig. 2.

Referring to Figs. 2 to 5, a battery pack 1000 according to one embodiment of the present disclosure includes at least one battery module 100, a pack frame 200 that houses the at least one battery module 100, and a venting flow path 300 formed between the battery module 100 and the pack frame 200.

The battery module 100 according to the present embodiment may include a battery cell stack in which a plurality of battery cells are stacked, a module frame 120 that houses the battery cell stack, a busbar frame that is located on the front surface and/or rear surface of the battery cell stack, a busbar and/or a sensing unit mounted on the busbar frame, and the like. However, the components included in the battery module 100 are not limited thereto, and depending on the design, the battery module 100 may be provided in the state of omitting some of the above-mentioned components, and may be provided in the state of adding other components not mentioned herein. The type of battery cells included in the battery module 100 is not particularly limited, and pouch-type, prismatic, or jelly-roll type cylindrical battery cells can all be applied.

The module frame 120 may include a metal having high thermal conductivity. Examples of the metal may be aluminum, gold, silver, copper, platinum or an alloy containing these. As the thermal conductivity of the metal is higher, the heat dissipation effect by the module frame improves, so that no specific range for thermal conductivity values is set.

Meanwhile, a venting part 130 may be located on one surface of the module frame 120. When the battery module 100 ignites, the venting part 130 can be for discharging gas, sparks, flame, or the like inside the module frame 120. The venting part 130 may be located on the lower part of one surface of the module frame 120. One surface of the module frame 120 on which the venting part 130 is formed may be a surface facing the electrode leads of the battery cell stack, the busbar frame, or the busbar.

The shape of the venting part 130 may be varied, and for example, it may be an opening shape. As another example, the venting part 130 may be in the form of a plate that is broken at a predetermined pressure or higher, such as a rupture disc. As yet another example, it may be in the form of a valve that can be opened at a predetermined pressure or higher, such as a relief valve.

As shown in Figs. 2 and 4, a plurality of battery modules 100 may be provided in the battery pack 1000. The plurality of battery modules 100 may be arranged in rows and columns within the pack frame 200.

The pack frame 200 according to the present embodiment can be for protecting the battery module 100 and electrical components connected thereto from external physical impact. The pack frame 200 may include a lower frame including a lower surface (bottom surface) and a side surface. The battery modules 100 are arranged in the inner space of the lower frame formed from the lower surface and the side surface, and then the upper plate or upper frame is coupled with the edge of the lower frame, thereby capable of sealing the pack frame 200. Here, the upper plate or upper frame may be interpreted as being included in the pack frame 200, but this is not necessarily the case.

The pack frame 200 may include a portion having high thermal conductivity in order to quickly dissipate heat generated in the internal space to the outside. For example, at least a portion of the pack frame 200 may be made of a metal having high thermal conductivity, and examples thereof may be aluminum, gold, silver, copper, platinum, an alloy containing these, or the like. Moreover, the pack frame 200 may partially have electrical insulation, and an insulating film may be provided at a position where insulation is required, or an insulating coating may be applied. A portion of the pack frame 200 to which an insulating film or an insulating coating is applied may be referred to as an insulating portion.

The venting flow path 300 may be for discharging gas generated from the battery module 100 to the outside of the pack frame 200. As the venting flow path 300 restricts the venting path of gas, it is possible to minimize the influence of the high-temperature gas and the like discharged from the battery module 100 on the adjacent battery module 100. The venting flow path 300 may be formed in a separation space between the battery module 100 and the pack frame 200. Flames, gases, and the like discharged from each battery module 100 to the venting flow path 300 move along the venting flow path 300, so that it can be discharged to the outside through a discharge port provided in the pack frame 200.

The venting flow path 300 may be preferably formed so as to correspond to all battery modules 100 within the battery pack 1000. For example, as shown in Fig. 4, when the battery modules 100 are arranged in 2 rows and 4 columns, the venting flow path 300 can be formed between the battery modules 100 and the pack frame 200 arranged in each row. Flames, gases, and the like discharged from the battery module 100 may move along the dotted line arrow through the venting flow path 300 to discharged through the discharge port.

A venting part 130 may be located on one surface of the battery module 100 facing the venting flow path 300. The venting part 130 of the battery module 100 may be located toward the venting flow path 300. The battery module 100 may be arranged so that one surface on which the venting part 130 is formed faces the venting flow path 300. As shown in Fig. 4, when the venting flow path 300 is formed along the edge of the pack frame 200, the battery module 100 may be arranged so that the venting part 130 is located toward the pack frame 200. The venting flow path 300 may be formed extendedly along one surface of the pack frame 200 corresponding to the venting part 130.

Referring to Fig. 5, the venting flow path 300 is located so as to be spaced apart from the lower surface of the pack frame 200, and an empty space can be formed between the venting flow path 300 and the lower surface of the pack frame 200. The venting flow path 300 may be located on an upper side of the venting part 130 of the battery module 100. The venting part 130 is located so as to correspond to the empty space, and gas, flame, and the like discharged through the venting part 130 may be discharged into an empty space and then moved to the venting flow path 300 located on the upper side of the empty space.

A filter mesh 400 may be located in the venting flow path 300. The filter mesh 400 may be formed on a lower surface of the venting flow path 300. Gas and flame discharged from the battery module 100 into the empty space may move to the venting flow path 300 through the filter mesh 400.

The filter mesh 400 may be located parallel to the lower surface of the pack frame 200. When the filter mesh 400 is arranged parallel to the lower surface of the pack frame 200, the gas and flame discharged from the battery module 100 pass through the filter mesh 400 and move to the venting flow path 300, and the spark may not move through the filter mesh 400. When the release of high-temperature particles, that is, sparks, is restricted by the filter mesh 400, the possibility of the spark coming into contact with external oxygen is lowered, which can prevent further ignition.

The filter mesh 400 may be spaced apart from the lower surface of the pack frame 200. The filter mesh 400 may be located on an upper side of the venting part 130 of the battery module 100. When the filter mesh 400 is formed on the lower surface of the pack frame 200, particles may fall in the direction of gravity and close an opening in the filter mesh 400. However, the venting flow path 300 of the present embodiment is located on an upper side of the initial movement path of the gas discharged through the venting part 130, and gases and the like discharged from the battery module 100 may move in a direction opposite to gravity and move to the venting flow path 300 via the filter mesh 400. Therefore, particles and the like discharged from the battery module 100 and moved together with the gas can collide with the filter mesh 400 and then fall, thereby being able to prevent the filter mesh 400 from being blocked by particles or the like.

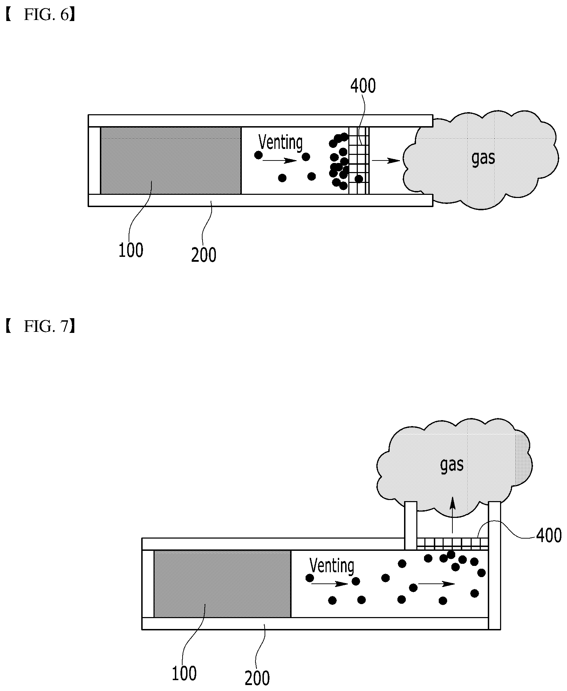

Figs. 6 and 7 are diagrams for comparing effects according to positions of filters. Fig. 6 is a comparative, non-claimed example in which the filter mesh 400 is formed perpendicular to the lower surface of the pack frame 200, and Fig. 7 is an example in which the filter mesh 400 is formed parallel to the lower surface of the pack frame 200.

Referring to Figs. 6 and 7, the gas or the like discharged from the battery module 100 is moved through the filter mesh 400, and the particles may be restricted in movement by the filter mesh 400 and may not be discharged to the outside.

Since the filter mesh 400 of Fig. 6 is arranged perpendicular to the initial movement direction of the gas discharged from the battery module 100, particles discharged together with the gas can collide with the filter mesh 400 without changing the direction. The filter mesh 400 of Fig. 6 has the advantage of effectively collecting a large number of particles, whereas as time passes, the opening of the filter mesh 400 can be blocked by particles, which causes a problem that the gas discharge path is sealed. As the particle closes an opening in the filter mesh 400, internal gas discharge is limited. This, after a predetermined time has elapsed, the opening of the filter mesh 400 may be closed, and the internal pressure of the battery pack 1000 increases, which may cause collapse or explosion of the pack frame 200.

Meanwhile, since the filter mesh 400 of Fig. 7 is arranged parallel to the initial movement direction of the gas discharged from the battery module 100, particles discharged together with the gas may rise in a direction opposite to gravity and collide with the filter mesh 400. Therefore, when the filter mesh 400 is formed as shown in Fig. 7, the particle is unlikely to collide with the filter mesh 400, or even if it collides, it may lose energy and fall. The filter mesh 400 of Fig. 7 may be less likely to be blocked by particles than the filter mesh 400 of Fig. 6, which can minimize collapse or explosion problems of the pack frame 200 due to the closing of the filter mesh 400.

In addition, since the filter mesh 400 is provided in the form of Fig. 7, the filter mesh 400 can be densely formed to have smaller openings. When the filter mesh 400 is provided in the form of Fig. 6, it may be desirable to form with a slightly large opening to prevent closure, but when it is provided in the form of Fig. 7, such limitation is not necessary, which is thus advantageous for various designs.

Meanwhile, although not specifically mentioned above, the battery pack according to one embodiment of the present disclosure may further include a battery management system (BMS) and/or a cooling device that control and manage battery's temperature, voltage, etc.

The battery pack according to an embodiment of the present disclosure can be applied to various devices. For example, the device to which the battery pack is applied may be a vehicle means such as an electric bicycle, an electric vehicle, or a hybrid vehicle, but the above-mentioned device is not limited thereto, and the battery pack according to the present embodiment can be used for various devices in addition to the above illustrations, which also falls within the scope of the present disclosure.

Although preferred embodiments of the present disclosure have been described in detail above, the scope of the present disclosure is not limited thereto, and various modifications and improvements can be made by those skilled in the art using the basic concepts of the present disclosure which are defined in the appended claims, which also fall within the scope of the present disclosure.

### [Description of Reference Numerals]

1000: battery pack
100: battery module
200: pack frame
300: venting flow path
400: filter mesh

## Claims

1. A battery pack (1000) comprising:
a battery module (100) including a plurality of battery cells, and
a pack frame (200) that houses the battery module (100), the pack frame (200) comprising a lower frame defining a lower surface and a side surface,
wherein a venting flow path (300) for discharging gas generated from the battery module (100) is provided between the battery module (100) and the pack frame (200),
wherein a venting part (130) is formed on one side surface of the battery module (100) and the battery module (100) is arranged so that one side surface on which the venting part (130) is formed faces the venting flow path (300), wherein the venting flow path (300) is located on the upper side of the venting part (130), and
wherein a filter mesh (400) is formed on a lower surface of the venting flow path (300).

2. The battery pack (1000) according to claim 1, wherein:
the filter mesh (400) is located parallel to the lower surface of the pack frame (200).

3. The battery pack (1000) according to claim 1, wherein:
the venting flow path (300) is located so as to be spaced apart from the lower surface of the pack frame (200).

4. The battery pack (1000) according to claim 1, wherein:
the battery module (100) is arranged so that one surface of the pack frame (200) and the venting part (130) face each other.

5. The battery pack (1000) according to claim 1, wherein:
the filter mesh (400) is located on the upper side of the venting part (130).

6. The battery pack (1000) according to claim 1, wherein:
the venting part (130) is in the form of a plate that is broken at a predetermined pressure or higher.

7. The battery pack (1000) according to claim 1, wherein:
the venting part (130) is in the form of a valve that is opened at a predetermined pressure or higher.

8. A device comprising at least one battery pack (1000) as set forth in claim 1.

## Patentansprüche

1. Batteriepack (1000), umfassend:
ein Batteriemodul (100), das eine Vielzahl von Batteriezellen aufweist, und
einen Packrahmen (200), der das Batteriemodul (100) aufnimmt, wobei der Packrahmen (200) einen unteren Rahmen umfasst, der eine untere Fläche und eine Seitenfläche definiert,
wobei ein Entlüftungsströmungspfad (300) zum Ableiten von Gas, das von dem Batteriemodul (100) erzeugt wird, zwischen dem Batteriemodul (100) und dem Packrahmen (200) vorgesehen ist,
wobei ein Entlüftungsteil (130) auf einer Seitenfläche des Batteriemoduls (100) ausgebildet ist und das Batteriemodul (100) so angeordnet ist, dass eine Seitenfläche, auf der das Entlüftungsteil (130) ausgebildet ist, dem Entlüftungsströmungspfad (300) zugewandt ist, wobei der Entlüftungsströmungspfad (300) auf der Oberseite des Entlüftungsteils (130) angeordnet ist, und
wobei ein Filtergitter (400) auf einer unteren Fläche des Entlüftungsströmungspfads (300) ausgebildet ist.

2. Batteriepack (1000) nach Anspruch 1, wobei:
das Filtergitter (400) parallel zur unteren Fläche des Packrahmens (200) angeordnet ist.

3. Batteriepack (1000) nach Anspruch 1, wobei:
der Entlüftungsströmungspfad (300) so angeordnet ist, dass er von der unteren Fläche des Packrahmens (200) beabstandet ist.

4. Batteriepack (1000) nach Anspruch 1, wobei:
das Batteriemodul (100) so angeordnet ist, dass eine Fläche des Packrahmens (200) und das Entlüftungsteil (130) einander zugewandt sind.

5. Batteriepack (1000) nach Anspruch 1, wobei:
das Filtergitter (400) auf der Oberseite des Entlüftungsteils (130) angeordnet ist.

6. Batteriepack (1000) nach Anspruch 1, wobei:
das Entlüftungsteil (130) in Form einer Platte vorliegt, die bei einem vorbestimmten oder höheren Druck bricht.

7. Batteriepack (1000) nach Anspruch 1, wobei:
das Entlüftungsteil (130) in Form eines Ventils vorliegt, das bei einem vorbestimmten oder höheren Druck geöffnet wird.

8. Vorrichtung, umfassend mindestens einen Batteriepack (1000) nach Anspruch 1.

## Revendications

1. Bloc-batterie (1000) comprenant :
un module de batterie (100) incluant une pluralité d'éléments de batterie, et un cadre de bloc (200) qui loge le module de batterie (100), le cadre de bloc (200) comprenant un cadre inférieur définissant une surface inférieure et une surface latérale,
dans lequel un trajet d'écoulement de ventilation (300) pour décharger le gaz généré par le module de batterie (100) est prévu entre le module de batterie (100) et le cadre de bloc (200),
dans lequel une partie de ventilation (130) est formée sur une surface latérale du module de batterie (100) et le module de batterie (100) est agencé de sorte qu'une surface latérale sur laquelle la partie de ventilation (130) est formée fait face au trajet d'écoulement de ventilation (300), dans lequel le trajet d'écoulement de ventilation (300) est situé sur le côté supérieur de la partie de ventilation (130), et
dans lequel un treillis filtrant (400) est formé sur une surface inférieure du trajet d'écoulement de ventilation (300).

2. Le bloc-batterie (1000) selon la revendication 1, dans lequel:
le treillis filtrant (400) est situé parallèlement à la surface inférieure du cadre de bloc (200).

3. Le bloc-batterie (1000) selon la revendication 1, dans lequel:
le trajet d'écoulement de ventilation (300) est situé de manière à être espacé de la surface inférieure du cadre de bloc (200).

4. Le bloc-batterie (1000) selon la revendication 1, dans lequel:
la partie de ventilation (130) est formée sur une surface latérale du module de batterie (100), et le module de batterie (100) est agencé de sorte qu'une surface du cadre de bloc (200) et la partie de ventilation (130) se font face.

5. Le bloc-batterie (1000) selon la revendication 1, dans lequel:
le treillis filtrant (400) est situé sur le côté supérieur de la partie de ventilation (130).

6. Le bloc-batterie (1000) selon la revendication 1, dans lequel:
la partie de ventilation (130) se présente sous la forme d'une plaque qui est rompue à une pression prédéterminée ou supérieure.

7. Le bloc-batterie (1000) selon la revendication 1, dans lequel:
la partie de ventilation (130) se présente sous la forme d'une soupape qui est ouverte à une pression prédéterminée ou supérieure.

8. Dispositif comprenant au moins un bloc-batterie (1000) tel que défini dans la revendication 1.
